# EUROPEAN PATENT SPECIFICATION

(11) **EP 3 290 738 B1**
(45) Date of publication and mention of the grant of the patent: **16.12.2020**
(21) Application number: 17188022.2
(22) Date of filing: 25.08.2017
(51) Int. Cl.: F16F 9/44, F16F 9/34, F16F 9/46

(54) **REMOTELY OPERATED BYPASS FOR A SUSPENSION DAMPER**
FERNGESTEUERTER BYPASSPASSAGE FÜR EINE FAHRWERKSDÄMPFUNG
DÉRIVATION CONTROLÉE À DISTANCE POUR UN AMORTISSEUR D'UNE SUSPENSION

(30) Priority: 25.08.2016 US 201662379487 P
(43) Date of publication of application: 07.03.2018
(60) Divisional application: 20206708.8
(73) Proprietor: Fox Factory, Inc., Scotts Valley, CA 95066 (US)
(72) Inventor: MARKING, John, El Cajon, CA 92021 (US)
(74) Representative: Casbon, Paul Richard

(56) References cited:
- EP-A2- 1 757 473
- EP-A2- 2 495 472
- US-A1- 2010 109 277
- US-A1- 2010 170 760
- US-A1- 2011 315 494

## Description

### BACKGROUND

The present invention relates to a vehicle suspension damper, a vehicle comprising the suspension damper, and to an on/off road vehicle having four wheels, each which having the suspension damper.

Vehicle suspension systems typically include a spring component or components and a dampening component or components. Typically, mechanical springs, like helical springs are used with some type of viscous fluid-based dampening mechanism and the two are mounted functionally in parallel. In some instances features of the damper or spring are user-adjustable. What is needed is an improved method and apparatus for adjusting dampening characteristics, including remote adjustment.

EP 2 495 472 discloses a method and apparatus for cooling damping fluid in a vehicle suspension damper unit. A damping unit includes a piston mounted in a fluid cylinder. A bypass fluid circuit having an integrated cooling assembly disposed therein is fluidly coupled to the fluid cylinder at axial locations that, at least at one point in the piston stroke, are located on opposite sides of the piston. The cooling assembly may include a cylinder having cooling fins thermally coupled to an exterior surface of the cylinder and made of a thermally conductive material. The bypass channel may include a check valve that permits fluid flow in only one direction through the bypass channel. The check valve may be remotely operated, either manually or automatically by an electronic controller. A vehicle suspension system may implement one or more damper units throughout the vehicle, controlled separately or collectively, automatically or manually.

US 2010/170760 discloses a damper assembly with a bypass for a vehicle that comprises a pressure cylinder with a piston and piston rod for limiting the flow rate of damping fluid as it passes from a first to a second side of said piston. A bypass provides fluid pathway between the first and second sides of the piston separately from the flow rate limitation. In one aspect, the bypass is remotely controllable from a passenger compartment of the vehicle. In another aspect, the bypass is remotely controllable based upon one or more variable parameters associated with the vehicle.

US 2010/109277 discloses a monotube shock absorber that can be adjusted remotely or otherwise. The monotube shock absorber includes a body tube that houses a working piston therein and a bypass tube that is attached to but external with respect to the body tube. A control valve influences flow volume and rate of oil that passes through the bypass tube in a manner that correspondingly influences damping and/or other characteristics of the monotube shock absorber. The monotube shock absorber can include a floating piston separating a volume of gas from a volume of oil. The volumes of gas and oil may be entirely housed in the body tube or may be at least partially housed in an external reservoir that can include an anti-cavitation valve.

### SUMMARY OF THE INVENTION

According to the present invention there is provided a vehicle suspension damper as set out in claim 1. Further features are set out in claims 2 to 7 to which attention is hereby directed.

According to another aspect of the present invention there is provided a vehicle comprising the vehicle suspension damper of any of claims 1 to 7.

In another aspect of the present invention there is provided an on/off road vehicle comprising the vehicle suspension damper of any of claims 1 to 7.

### BRIEF DESCRIPTION OF THE DRAWINGS

So that the manner in which the above recited features can be understood in detail, a more particular description may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
FIG. 1 is a section view showing a suspension damping unit with a remotely operable bypass.
FIG. 2 is an enlarged section view showing the remotely operable valve of the bypass in the open position.
FIG. 3 is a section view showing the valve of FIG. 2 in a closed position.
FIG. 4 is a section view showing the valve of FIG. 2 in a locked-out position.
FIG. 5 is a schematic diagram showing a control arrangement for a remotely operated bypass.
FIG. 6 is a schematic diagram showing another control arrangement for a remotely operated bypass.
FIG. 7 is a graph showing some operational characteristics of the arrangement of FIG. 4.
FIG. 8 is an enlarged section view showing a coil spring blow off system included in the remotely operable valve with of the bypass in the open position.
FIG. 9 is a section view showing the valve of FIG. 8 in a closed position.
FIG. 10 is an enlarged section view showing a coil spring blow off system with a gas pressure supplement included in the remotely operable valve of the bypass in the open position.
FIG. 11 is a section view showing the valve of FIG. 10 in a closed position.
FIG. 12 is an enlarged section view showing a gas pressure supplement included in the remotely operable valve of the bypass in the open position.
FIG. 13 is a section view showing the valve of FIG. 12 in a closed position.
FIG. 14 is an enlarged section view showing the remotely operable valve of the bypass that includes a preload adjuster in the open position.
FIG. 15 is a section view showing the valve of FIG. 14 in a closed position.
FIG. 16 is a section view showing the valve of FIG. 14 in a locked-out position.
FIG. 17 is an enlarged section view showing the remotely operable valve of the bypass that includes a preload adjuster and hydraulic pressure being applied to increase low speed damping.
FIG. 18 is a section view showing the valve of FIG. 17 with the hydraulic pressure being removed to reduce low speed damping.

### DETAILED DESCRIPTION

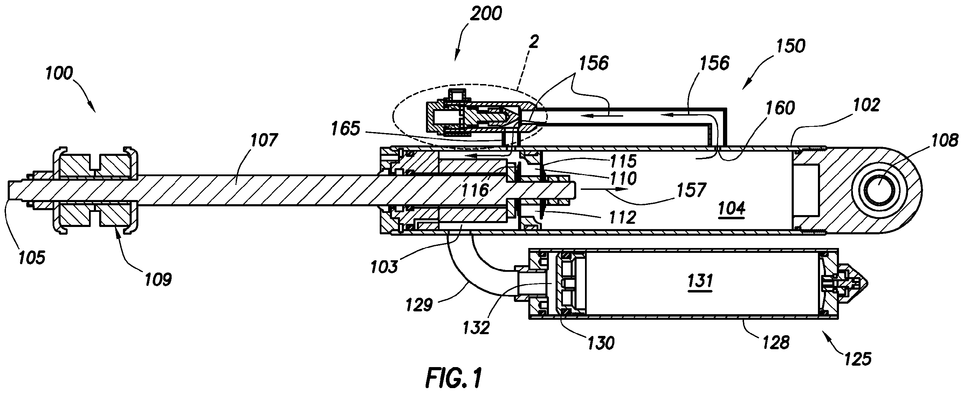

As used herein, the terms "down" "up" "downward" "upward" "lower" "upper" and other directional references are relative and are used for reference only. FIG. 1 is a section view of a suspension damper unit 100. The damper unit 100 includes a damper cylinder 102 with a rod 107 and a piston 105. Typically, the fluid meters from one side of the piston 105 to the other side by passing through flow paths 110, 112 formed in the piston 105. In the embodiment shown, shims 115, 116 are used to partially obstruct the flow paths 110, 112 in each direction. By selecting shims 115, 116 having certain desired stiffness characteristics, the dampening effects caused by the piston 105 can be increased or decreased and dampening rates can be different between the compression and rebound strokes of the piston 105. For example, shims 115 are configured to meter rebound flow from the rebound portion 103 of the damper cylinder 102 to the compression portion 104 of the damper cylinder 102. Shims 116, on the other hand, are configured to meter compression flow from the 104 compression portion of the cylinder to the rebound portion 103. In one embodiment, shims 116 are not included on the rebound portion 103 side, nor is there a compression flow path such as path 112, leaving the piston 105 essentially "locked out" in the compression stroke without some means of flow bypass. Note that piston apertures (not shown) may be included in planes other than those shown (e.g. other than apertures used by paths 110 and 112) and further that such apertures may, or may not, be subject to the shims 115, 116 as shown (because for example, the shims 115, 116 may be clover-shaped or have some other non-circular shape).

A reservoir 125 is in fluid communication with the damper cylinder 102 for receiving and supplying damping fluid as the rod 107 moves in and out of the damper cylinder 102. The reservoir 125 includes a reservoir cylinder 128 in fluid communication with a rebound portion 103 of the damper cylinder 102 via fluid conduit 129. The reservoir also includes a floating piston 130 with a volume of gas on a backside 131 ("blind end" side) of it, the gas being compressible as the reservoir cylinder 128, on the "frontside" 132 fills with damping fluid due to movement of the rod 107 and piston 105 into the damper cylinder 102. Certain features of reservoir type dampers are shown and described in U.S. Pat. No. 7,374,028, which is incorporated herein, in its entirety, by reference. The upper portion of the rod 107 is supplied with a bushing set 109 for connecting to a portion of a vehicle wheel suspension linkage. In another embodiment, not shown, the upper portion of the rod 107 (opposite the piston) may be supplied with an eyelet to be mounted to one part of the vehicle, while the lower part of the housing shown with an eyelet 108 is attached to another portion of the vehicle, such as the frame, that moves independently of the first part. A spring member (not shown) is usually mounted to act between the same portions of the vehicle as the damper unit 100. As the rod 107 and piston 105 move into damper cylinder 102 (during compression), the damping fluid slows the movement of the two portions of the vehicle relative to each other due to the incompressible fluid moving through the flow paths 112 (past shims 116) provided in the piston 105 and/or through a metered bypass 150, as will be described herein. As the rod 107 and piston 105 move out of the damper cylinder 102 (during extension or "rebound") fluid meters again through flow paths 110 and the flow rate and corresponding rebound rate is controlled by the shims 115.

In FIG. 1, the piston 105 is shown at full extension and moving downward in a compression stroke, the movement shown by arrow 157. A bypass assembly 150 includes a tubular body 155 that communicates with the damper cylinder 102 through entry pathway 160 and exit pathway 165. The bypass assembly 150 permits damping fluid to travel from a first side of the piston 105 to the other side without traversing shimmed flow paths 110, 112 that may otherwise be traversed in a compression stroke of the damper unit 100. In FIG. 1, the bypass assembly 150 is shown in an "open" position with the flow of fluid through the bypass assembly 150 shown by arrows 156 from a compression portion 104 to a rebound portion 103 of the piston 105. In the embodiment of FIG. 1, the bypass assembly 150 includes a remotely controllable, needle-type check valve/throttle valve 200, located proximate an exit pathway 165 allowing flow in direction arrows 156 and checking flow in opposite direction.

The entry pathway 160 to the bypass assembly 150 in the embodiment shown in FIG. 1 is located towards a lower end of the damper cylinder 102. In one embodiment, as selected by design, the bypass assembly 150 will not operate after the piston 105 passes the entry pathway 160 near the end of a compression stroke. This "position sensitive" feature ensures increased dampening will be in effect near the end of the compression stoke to help prevent the piston from approaching a "bottomed out" position (e.g. impact) in the damper cylinder 102. In some instances, multiple bypasses are used with a single damper and the entry pathways for each may be staggered axially along the length of the damper cylinder in order to provide an ever-increasing amount of dampening (and less bypass) as the piston moves through its compression stroke and towards the bottom of the damping cylinder. Each bypass may include some or all of the features described herein. Additionally, the bypass assembly 150 and remotely controllable valve 200 of the present embodiments can be used in any combination with the bypass valves shown and described in co-pending U.S. patent application Ser. No. 12/684,072.

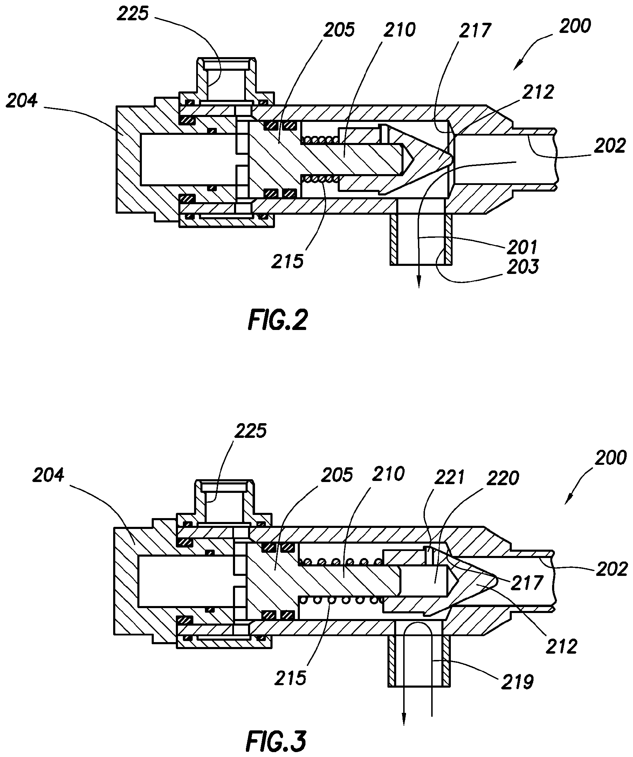

FIGS. 2, 3 and 4 are enlarged views showing the remotely controllable valve 200 in various positions. In FIG. 2, the remotely controllable valve 200 is in a damping-open position (fluid path shown by arrow 201) permitting the bypass assembly 150 to operate in a compression stroke of the damper unit 100. The remotely controllable valve 200 includes a valve body 204 housing a movable piston 205 which is sealed within the body. Three fluid communication points are provided in the body including an inlet 202 and outlet 203 for fluid passing through the remotely controllable valve 200 as well as an inlet 225 for control fluid as will be described herein. Extending from a first end of the piston 205 is a shaft 210 having a cone-shaped member 212 (other shapes such as spherical or flat, with corresponding seats, will also work suitably well) disposed on an end thereof. The cone-shaped member 212 is telescopically mounted relative to, and movable on, the shaft 210 and is biased in an extended position (FIG. 3) due to a spring 215 coaxially mounted on the shaft 210 between the cone-shaped member 212 and the piston 205. Due to the spring 215 biasing, the cone-shaped member 212 normally seats itself against a seat 217 formed in an interior of the valve body 204. In the damping open position shown however, fluid flow through the bypass assembly 150 has provided adequate force on the cone-shaped member 212 to urge it backwards, at least partially loading the spring 215 and creating fluid path 201 from the bypass assembly 150 into a rebound area of the damper cylinder 102 as shown in FIG. 1. The characteristics of the spring 215 are typically chosen to permit the remotely controllable valve 200 (e.g. cone-shaped member 212) to open at a predetermined bypass pressure, with a predetermined amount of control pressure applied to inlet 225, during a compression stroke of the damper unit 100. For a given spring 215, higher control pressure at inlet 225 will result in higher bypass pressure required to open the remotely controllable valve 200 and correspondingly higher damping resistance in the bypass assembly 150 (more compression damping due to that bypass assembly 150). In one embodiment, the remotely controllable valve 200 is open in both directions when the piston 205 is "topped out" against valve body 204. In another embodiment however, when the piston 205 is abutted or "topped out" against valve body 204 the spring 215 and relative dimensions of the remotely controllable valve 200 still allow for the cone-shaped member 212 to engage the valve seat thereby closing the remotely controllable valve 200. In such embodiment backflow from the rebound portion 103 of the damper cylinder 102 to the compression portion 104 is always substantially closed and cracking pressure from flow along path shown by arrows 156 is determined by the pre-compression in the spring 215. In such embodiment, additional fluid pressure may be added to the inlet 225 through port to increase the cracking pressure for flow along path shown by arrows 156 and thereby increase compression damping through the bypass assembly 150 over that value provided by the spring compression "topped out." It is generally noteworthy that while the descriptions herein often relate to compression damping bypass and rebound shut off, some or all of the bypass channels (or channel) on a given suspension unit may be configured to allow rebound damping bypass and shut off or impede compression damping bypass.

FIG. 3 shows the remotely controllable valve 200 in a closed position (which it assumes during a rebound stroke of the damper unit 100). As shown, the cone-shaped member 212 is seated against seat 217 due to the force of the spring 215 and absent an opposite force from fluid entering the remotely controllable valve 200 along path shown by arrows 156 from the bypass assembly 150. As cone-shaped member 212 telescopes out, a gap 220 is formed between the end of the shaft 210 and an interior of cone-shaped member 212. A vent 221 is provided to relieve any pressure formed in the gap 220. With the fluid path 201 closed, fluid communication is substantially shut off from the rebound portion 103 of the damper cylinder 102 into the valve body 204 (and hence through the bypass assembly 150 back to the compression portion 104 is closed) and its "dead-end" path is shown by arrow 219.

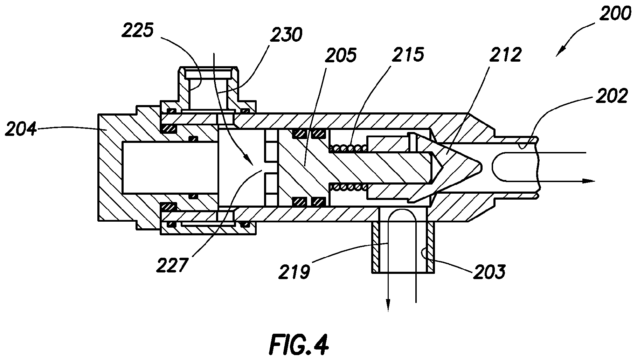

Inlet 225 is formed in the valve body 204 for operation of the remotely controllable valve 200. In one embodiment inlet 225 may be pressurized to shift the remotely controllable valve 200 to a third or "locked-out" position. In FIG. 4, the valve 200 is shown in the locked-out position, thereby preventing fluid flow through the bypass assembly 150 in either direction regardless of compression or rebound stroke. In the embodiment shown, the control inlet 225 provides a fluid path 230 to a piston surface 227 formed on an end of the piston 205, opposite the cone-shaped member 212. Specifically, activating pressure is introduced via inlet 225 to move the piston 205 and with it, cone-shaped member 212 toward seat 217. Sufficient activating pressure fully compresses the spring 215 (substantial stack out) and/or closes the gap 220 thereby closing the cone-shaped member 212 against the seat, sealing the bypass assembly 150 to both compression flow and rebound flow. In the embodiment shown, the remotely controllable valve 200 can be shifted to the third, locked-out position from either the first, open position or the second, closed position. Note that, when in the "locked out" position, the remotely controllable valve 200 as shown will open to compression flow along path shown by arrows 156 when the compression flow pressure acting over the surface area of the cone-shaped member 212 exceeds the inlet 225 pressure acting over the surface area of the piston 205. Such inlet 225 pressure may be selected to correspond therefore to a desired compression overpressure relief value or "blow off" value thereby allowing compression bypass under "extreme" conditions even when the bypass assembly 150 is "locked out".

In the embodiment illustrated, the remotely controllable valve 200 is intended to be shifted to the locked-out position with control fluid acting upon piston 205. In one embodiment, the activating pressure via inlet 225 is adjusted so that the remotely controllable valve 200 is closed to rebound fluid (with the cone-shaped member 212 in seat 217) but with the spring 215 not fully compressed or stacked out. In such a position, a high enough compression force (e.g. compression flow) will still open the remotely controllable valve 200 and allow fluid to pass through the remotely controllable valve 200 in a compression stroke. In one arrangement, the activating pressure, controlled remotely, may be adjusted between levels where the lock-out is not energized and levels where the lock-out is fully energized. The activating pressure may also be adjusted at intermediate levels to create more or less damping resistance through the bypass assembly 150. The activating pressure may be created by hydraulic or pneumatic input or any other suitable pressure source.

In one example, the remotely controllable valve 200 is moved to a locked-out position and the bypass feature is disabled by remote control from a simple operator-actuated switch located in the passenger compartment of the vehicle. In one embodiment, fluid pressure for controlling (e.g. locking-out) the remotely controllable valve 200 is provided by the vehicle's on-board source of pressurized hydraulic fluid created by, for example, the vehicle power steering system. In one embodiment, pneumatic pressure is used to control (e.g. close) the remotely controllable valve 200 where the pneumatic pressure is generated by an on-board compressor and accumulator system and conducted to the remotely controllable valve 200 via a fluid conduit. In one embodiment, a linear electric motor (e.g. solenoid), or other suitable electric actuator, is used, in lieu of the aforementioned inlet 225 pressure, to move the "piston 205" axially within valve body 204. A shaft of the electric actuator (not shown) may be fixed to the piston 205 such that axial movement of the shaft causes axial movement of the piston 205 which in turn causes movement of the cone-shaped member 212 (and compression of the spring 215 as appropriate). In one embodiment, the electric actuator is configured to "push" the piston 205 towards a closed position and to "pull" the piston 205 away from the closed position depending on the direction of the current switched through the actuator.

As in other embodiments, the remotely controllable valve 200 may be solenoid operated or hydraulically operated or pneumatically operated or operated by any other suitable motive mechanism. The remotely controllable valve 200 may be operated remotely by a switch 415 or potentiometer located in the cockpit of a vehicle or attached to appropriate operational parts of a vehicle for timely activation (e.g. brake pedal) or may be operated in response to input from a microprocessor (e.g. calculating desired settings based on vehicle acceleration sensor data) or any suitable combination of activation means. In like manner, a controller for the adjustable pressure source (or for both the source and the valve) may be cockpit mounted and may be manually adjustable or microprocessor controlled or both or selectively either.

It may be desirable to increase the damping rate when moving a vehicle from off-road to on highway use. Off-road use often requires a high degree of compliance to absorb shocks imparted by the widely varying terrain. On highway use, particularly with long wheel travel vehicles, often requires more rigid shock absorption to allow a user to maintain control of a vehicle at higher speeds. This may be especially true during cornering or braking.

One embodiment comprises a four wheeled vehicle having solenoid valve equipped shock absorbers at each (of four) wheel. The remotely controllable valve 200 (which in one embodiment is cable operated instead of solenoid operated) of each of the front shock absorbers may be electrically connected with a linear switch 415 (such as that which operates an automotive brake light) that is activated in conjunction with the vehicle brake pedal. When the brake pedal is depressed beyond a certain distance, corresponding usually to harder braking and hence potential for vehicle nose dive, the electric switch 415 connects a power supply to the normally open solenoid in each of the front shocks thereby closing the paths in those shocks. As such the front shocks become more rigid during hard braking. Other mechanisms may be used to trigger the shocks such as accelerometers (e.g. tri-axial) for sensing pitch and roll of the vehicle and activating, via a microprocessor, the appropriate remotely controllable valve 200 for optimum vehicle control.

In one embodiment, a vehicle steering column includes right turn and left turn limit switches such that a hard turn in either direction activates the solenoid on the shocks opposite that direction (for example a hard right turn would cause more rigid shocks on the vehicle left side). Again, accelerometers in conjunction with a microprocessor and a switched power supply may perform the solenoid activation function by sensing the actual g-force associated with the turn (or braking; or throttle acceleration for the rear shock activation) and triggering the appropriate solenoid(s) at a preset threshold g-force.

In one embodiment, a pressure intensifier damper arrangement may be located within the fluid path such that the solenoid-controlled valve controls flow through that auxiliary damper which is then additive with the damper mechanism of the damping piston. In one embodiment the damper mechanism of the damping piston comprises a pressure intensifier. In one embodiment one or both of the dampers comprise standard shim type dampers. In one embodiment one or both of the dampers include an adjustable needle for low speed bleed. In one embodiment a blow off (e.g. checking poppet type or shim) is included in one of the flow paths or in a third parallel flow path.

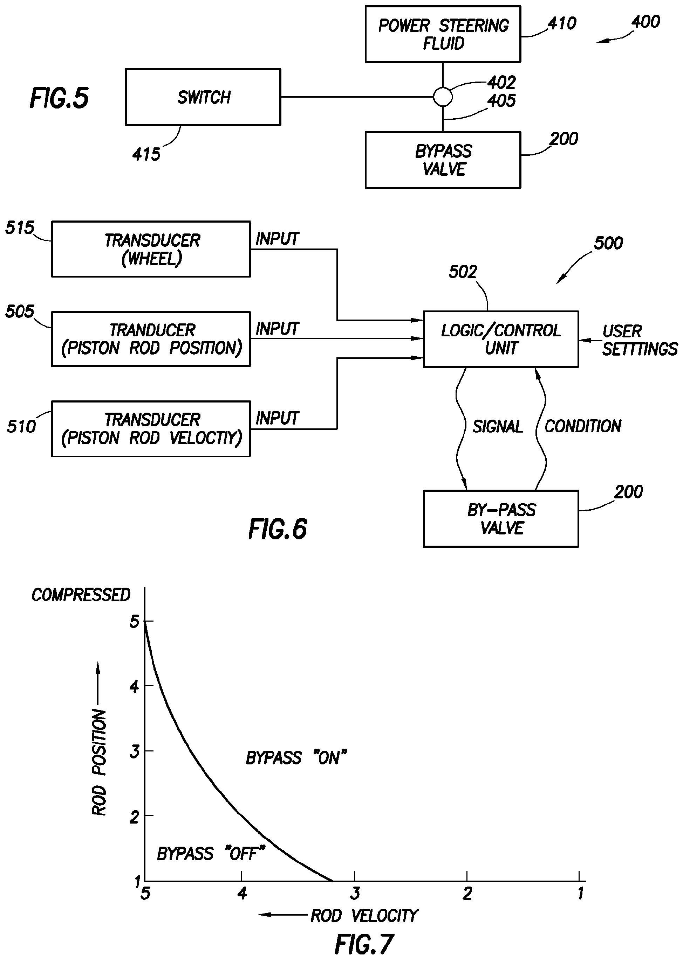

FIG. 5 is a schematic diagram illustrating a control arrangement 400 used to provide remote control of a remotely controllable valve 200 using a vehicle's power steering fluid (although any suitable fluid pressure source may be substituted for reservoir 410 as could be an electrical current source in the case of an remotely controllable valve 200). As illustrated, a fluid pathway 405 having a switch-operated valve (and/or pressure regulator) 402 therein runs from a fluid (or current) reservoir 410 that is kept pressurized by, in one embodiment, a power steering pump (not shown) to a remotely controllable valve 200 that is operable, for example, by a user selectable dash board switch 415. The switch-operated valve 402 permits fluid to travel to the remotely controllable valve 200, thereby urging it to a closed position. When the switch 415 is in the "off" position, working pressure within the damper unit 100, and/or a biasing member such as a spring or annular atmospheric chamber (not shown), returns the bypass assembly 150 to its normally-open position (with or without residual spring compression as designed). In another embodiment, a signal line runs from the switch 415 to a solenoid along an electrically conductive line. Thereafter, the solenoid converts electrical energy into mechanical movement (identified by item 405) and shifts a plunger of the remotely controllable valve 200, thereby opening or closing the valve or causing the plunger to assume some predetermined position in-between.

While FIG. 5 is simplified and involves control of a single bypass valve, it will be understood that the switch-operated valve 402 could be plumbed to simultaneously or selectively (e.g. multi-position valve) provide a signal to two or more (e.g. four) bypass valves operable with two or more vehicle dampers and/or with a single damper having multiple bypass channels and multiple corresponding valves (e.g. remotely controllable valve 200) (or multiple dampers having multiple bypass channels). Additional switches could permit individual operation of separate damper bypass valves in individual bypass channels, whether on separate dampers or on the same multiple bypass damper, depending upon an operator's needs. While the example of FIG. 5 uses fluid power for operating the remotely controllable valve 200, a variety of means are available for remotely controlling a remotely controllable valve 200. For instance, a source of electrical power from a 12 volt battery could be used to operate a solenoid member, thereby shifting a piston 205 in remotely controllable valve 200 between open and closed positions. The remotely controllable valve 200 or solenoid operating signal can be either via a physical conductor or an RF signal (or other wireless such as Bluetooth, WiFi, ANT) from a transmitter operated by the switch 415 to a receiver operable on the remotely controllable valve 200 (which would derive power from the vehicle power system such as 12 volt).

A remotely controllable valve 200 like the one described above is particularly useful with an on/off road vehicle. These vehicles can have as much as 20" of shock absorber travel to permit them to negotiate rough, uneven terrain at speed with usable shock absorbing function. In off-road applications, compliant dampening is necessary as the vehicle relies on its long travel suspension when encountering often large off-road obstacles. Operating a vehicle with very compliant, long travel suspension on a smooth road at higher speeds can be problematic due to the springiness/sponginess of the suspension and corresponding vehicle handling problems associated with that (e.g. turning roll, braking pitch). Such compliance can cause reduced handling characteristics and even loss of control. Such control issues can be pronounced when cornering at high speed as a compliant, long travel vehicle may tend to roll excessively. Similarly, such a vehicle may pitch and yaw excessively during braking and acceleration. With the remotely operated bypass dampening and "lock out" described herein, dampening characteristics of a shock absorber can be completely changed from a compliantly dampened "springy" arrangement to a highly dampened and "stiffer" (or fully locked out) system ideal for higher speeds on a smooth road. In one embodiment where compression flow through the piston is completely blocked, closure of the bypass assembly 150 results in substantial "lock out" of the suspension (the suspension is rendered essentially rigid except for the movement of fluid through shimmed valve). In one embodiment where some compression flow is allowed through the piston 105 (e.g. port 112 and shims 116), closure of the bypass assembly 150 (closure of remotely controllable valve 200) results in a stiffer but still functional compression damper.

In one embodiment, the shims 116 are sized, to optimize damping when the bypass assembly 150 is open and when bypass assembly 150 is closed based on total anticipated driving conditions. In one embodiment the remotely controllable valve 200 is closed but may be opened at a predetermined compression flow pressure resulting in fairly stiff handling but maintaining an ability for the vehicle to absorb relatively large bumps. In one embodiment a bypass assembly 150 having an entry pathway 160 located axially toward an upward (or "rebound" end) end of damper cylinder 102 remains wide open while other bypass channels having corresponding openings 160 located axially more toward the compression end of damper cylinder 102 are closed or highly restricted. Such would result in a suspension that would readily absorb small amplitude compressions (smooth highway ride) but would resist large compression deflections of low force magnitude (as during heavy cornering or braking) and would absorb large deflections of high force magnitude. A vehicle so configured would ride well on pavement (smooth surface), would absorb large unexpected bumps and would generally not wallow when cornering or braking.

In addition to, or in lieu of, the simple, switch operated remote arrangement of FIG. 5; the remotely controllable valve 200 can be operated automatically based upon one or more driving conditions. FIG. 6 shows a schematic diagram of a remote control system 500 based upon any or all of vehicle speed, damper rod speed, and damper rod position. One embodiment of the arrangement of FIG. 6 is designed to automatically increase dampening in a shock absorber in the event a damper rod reaches a certain velocity in its travel towards the bottom end of a damper at a predetermined speed of the vehicle. In one embodiment the system 500 adds dampening (and control) in the event of rapid operation (e.g. high rod velocity) of the damper unit 100 to avoid a bottoming out of the damper rod as well as a loss of control that can accompany rapid compression of a shock absorber with a relative long amount of travel. In one embodiment the system 500 adds dampening (e.g. closes or throttles down the bypass) in the event that the rod velocity in compression is relatively low, but the rod progresses past a certain point in the travel. Such configuration aids in stabilizing the vehicle against excessive low rate suspension movement events such as cornering roll, braking and acceleration yaw and pitch and "g-out."

FIG. 6 illustrates, for example, a system including three variables: rod speed, rod position and vehicle speed. Any or all of the variables shown may be considered by processor 502 in controlling the solenoid in the remotely controllable valve 200. Any other suitable vehicle operation variable may be used in addition to or in lieu of the variables 515, 505, 510 such as for example piton rod compression strain, eyelet strain, vehicle mounted accelerometer (or tilt/inclinometer) data or any other suitable vehicle or component performance data. In one embodiment the position of piston 105 within damper cylinder 102 is determined using an accelerometer to sense modal resonance of damper cylinder 102. Such resonance will change depending on the position of the piston 105 and an on-board processor (computer) is calibrated to correlate resonance with axial position. In one embodiment, a suitable proximity sensor or linear coil transducer or other electromagnetic transducer is incorporated in the damper cylinder 102 to provide a sensor to monitor the position and/or speed of the piston 105 (and suitable magnetic tag) with respect to the damper cylinder 102. In one embodiment, the magnetic transducer includes a waveguide and a magnet, such as a doughnut (toroidal) magnet that is joined to the cylinder and oriented such that the magnetic field generated by the magnet passes through the piston rod 107 and the waveguide. Electric pulses are applied to the waveguide from a pulse generator that provides a stream of electric pulses, each of which is also provided to a signal processing circuit for timing purposes. When the electric pulse is applied to the waveguide a magnetic field is formed surrounding the waveguide. Interaction of this field with the magnetic field from the magnet causes a torsional strain wave pulse to be launched in the waveguide in both directions away from the magnet. A coil assembly and sensing tape is joined to the waveguide. The strain wave causes a dynamic effect in the permeability of the sensing tape which is biased with a permanent magnetic field by the magnet. The dynamic effect in the magnetic field of the coil assembly due to the strain wave pulse, results in an output signal from the coil assembly that is provided to the signal processing circuit along signal lines. By comparing the time of application of a particular electric pulse and a time of return of a sonic torsional strain wave pulse back along the waveguide, the signal processing circuit can calculate a distance of the magnet from the coil assembly or the relative velocity between the waveguide and the magnet. The signal processing circuit provides an output signal, either digital, or analog, proportional to the calculated distance and/or velocity.

While a transducer assembly located at the damper unit 100 measures rod speed and location, a separate wheel speed transducer for sensing the rotational speed of a wheel about an axle includes housing fixed to the axle and containing therein, for example, two permanent magnets. In one embodiment the magnets are arranged such that an elongated pole piece commonly abuts first surfaces of each of the magnets, such surfaces being of like polarity. Two inductive coils having flux-conductive cores axially passing therethrough abut each of the magnets on second surfaces thereof, the second surfaces of the magnets again being of like polarity with respect to each other and of opposite polarity with respect to the first surfaces.

In one embodiment, as illustrated in FIG. 6, a logic unit 502 with user-definable settings receives inputs from the rod speed 510 and location 505 transducers as well as the wheel speed transducer 515. The logic unit 502 is user-programmable and depending on the needs of the operator, the unit records the variables and then if certain criteria are met, the logic circuit sends its own signal to the bypass to either close or open (or optionally throttle) the remotely controllable valve 200. Thereafter, the condition of the bypass valve is relayed back to the logic unit 502.

In one embodiment, the logic shown in FIG. 6 assumes a single damper but the logic circuit is usable with any number of dampers or groups of dampers. For instance, the dampers on one side of the vehicle can be acted upon while the vehicles other dampers remain unaffected.

While the examples illustrated relate to manual operation and automated operation based upon specific parameters, the remotely controllable valve 200 or the remote operation of pressure source 201 can be used in a variety of ways with many different driving and road variables. In one example, the remotely controllable valve 200 is controlled based upon vehicle speed in conjunction with the angular location of the vehicle's steering wheel. In this manner, by sensing the steering wheel turn severity (angle of rotation), additional dampening can be applied to one damper or one set of dampers on one side of the vehicle (suitable for example to mitigate cornering roll) in the event of a sharp turn at a relatively high speed. In another example, a transducer, such as an accelerometer, measures other aspects of the vehicle's suspension system, like axle force and/or moments applied to various parts of the vehicle, like steering tie rods, and directs change to the bypass valve positioning in response thereto. In another example, the bypass can be controlled at least in part by a pressure transducer measuring pressure in a vehicle tire and adding dampening characteristics to some or all of the wheels in the event of, for example, an increased or decreased pressure reading. In one embodiment, the damper bypass or bypasses are controlled in response to braking pressure (as measured, for example, by a brake pedal sensor or brake fluid pressure sensor or accelerometer). In still another example, a parameter might include a gyroscopic mechanism that monitors vehicle trajectory and identifies a "spin-out" or other loss of control condition and adds and/or reduces dampening to some or all of the vehicle's dampers in the event of a loss of control to help the operator of the vehicle to regain control.

FIG. 7 is a graph that illustrates a possible operation of one embodiment of the bypass assembly 500 of FIG. 6. The graph assumes a constant vehicle speed. For a given vehicle speed, rod position is shown on a y axis and rod velocity is shown on an x axis. The graph illustrates the possible on/off conditions of the bypass at combinations of relative rod position and relative rod velocity. For example, it may be desired that the bypass is operable (bypass "on") unless the rod is near its compressed position and/or the rod velocity is relatively high (such as is exemplified in FIG. 7). The on/off configurations of FIG. 7 are by way of example only and any other suitable on/off logic based on the variable shown or other suitable variables may be used. In one embodiment it is desirable that the damper unit 100 become relatively stiff at relatively low rod velocities and low rod compressive strain (corresponding for example to vehicle roll, pitch or yaw) but remains compliant in other positions. In one embodiment the rod 107 includes a "blow off" (overpressure relief valve typically allowing overpressure flow from the compression portion 104 to the rebound portion 103) valve positioned in a channel coaxially disposed though the rod 107 and communicating one side of the piston 105 (and cylinder) with the other side of the piston 105 (and cylinder) independently of the apertures 110,112 and the bypass assembly 150.

In one embodiment, the logic shown in FIG. 6 assumes a single damper unit 100 but the logic circuit is usable with any number of dampers or groups of dampers. For instance, the dampers on one side of the vehicle can be acted upon while the vehicles other dampers remain unaffected.

While the examples illustrated relate to manual operation and automated operation based upon specific parameters, the remotely operated bypass can be used in a variety of ways with many different driving and road variables. In one example, the bypass is controlled based upon vehicle speed in conjunction with the angular location of the vehicle's steering wheel. In this manner, by sensing the steering wheel turn severity (angle of rotation), additional dampening can be applied to one damper unit 100 or one set of dampers on one side of the vehicle (suitable for example to mitigate cornering roll) in the event of a sharp turn at a relatively high speed. In another example, a transducer, such as an accelerometer measures other aspects of the vehicle's suspension system, like axle force and/or moments applied to various parts of the vehicle, like steering tie rods, and directs change to the bypass valve positioning in response thereto. In another example, the bypass can be controlled at least in part by a pressure transducer measuring pressure in a vehicle tire and adding dampening characteristics to some or all of the wheels in the event of, for example, an increased or decreased pressure reading. In one embodiment the damper bypass or bypasses are controlled in response to braking pressure (as measured for example by a brake pedal sensor or brake fluid pressure sensor or accelerometer) In still another example, a parameter might include a gyroscopic mechanism that monitors vehicle trajectory and identifies a "spin-out" or other loss of control condition and adds and/or reduces dampening to some or all of the vehicle's dampers in the event of a loss of control to help the operator of the vehicle to regain control.

### Secondary pressure sensitive bypass check valve

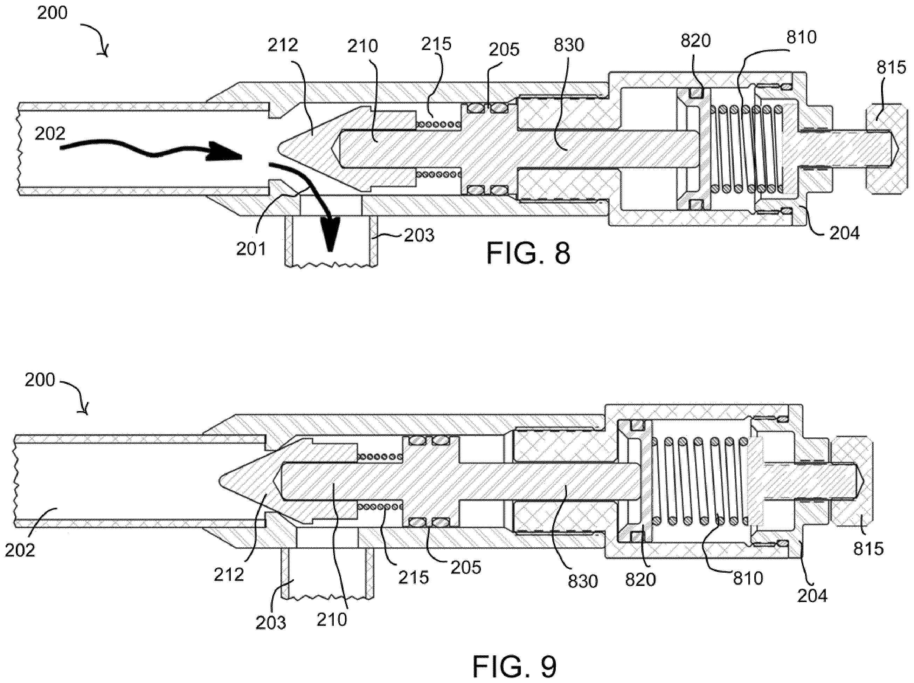

FIGS. 8-18 are enlarged views showing the remotely controllable valve 200 in various positions and with slightly different configurations. However, the remotely controllable valve 200 shown in FIGS. 8-18 are similar to those shown in FIGS. 2-4. As such, and for purposes of clarity, unless otherwise indicated, it should be appreciated that the components of FIGS. 8-18 are similar to those of Figures 2-4 and rely upon the previous descriptions found in the discussion of FIGS 2-4.

FIG. 8 is an enlarged section view showing a coil spring blow off system included in the remotely operable valve with of the bypass in the open position. In general, the coil spring blow off system includes a coil spring 810 that is between a coil spring piston 820 and a preload adjuster 815. The remotely controllable valve 200 is in a damping-open position (fluid path shown by arrow 201) permitting the bypass assembly 150 to operate in a compression stroke of the damper unit 100.

The remotely controllable valve 200 includes a valve body 204 housing a movable piston 205 which is sealed within the body. Two fluid communication points are provided in the body including an inlet 202 and outlet 203 for fluid passing through the remotely controllable valve 200. On one end of piston 205 is shaft 210 having a cone-shaped member 212 (other shapes such as spherical or flat, with corresponding seats, will also work suitably well) disposed on an end thereof. On the opposite end of piston 205 is shaft 830 which rests against coil spring piston 820. Coil spring piston 820 is being pressed on its other side by coil spring 810 which is sandwiched between coil spring piston 820 and preload adjuster 815. Preload adjuster 815 can be adjusted remotely or at the remotely controllable valve 200 by actions such as twisting, to increase or decrease the force applied to coil spring 810. By varying the force on coil spring 810, the force required to open the valve can be varied. By adjusting preload adjuster 815 low speed compression and rebound in the area governed by the bypass tubes can be changed. Further, the coil spring blow off setup will allow greater flow at high speed since the initial setting does not prevent full flow.

The characteristics of coil spring 810 are typically chosen to permit the remotely controllable valve 200 (e.g. cone-shaped member 212) to open at a predetermined bypass pressure, with a predetermined amount of control pressure applied to inlet 225, during a compression stroke of the damper unit 100. For a given spring 215, increased compression of coil spring 810 based on adjustments made to preload adjuster 815 will result in higher bypass pressure required to open the remotely controllable valve 200 and correspondingly higher damping resistance in the bypass assembly 150 (more compression damping due to that bypass assembly 150).

FIG. 9 shows the remotely controllable valve 200 in a closed position (which it assumes during a rebound stroke of the damper unit 100). As shown, the cone-shaped member 212 is seated due to the force of the spring 215 and coil spring 810, and absent an opposite force from fluid entering the remotely controllable valve 200 along path shown by arrows 156 from the bypass assembly 150. With the fluid path 201 closed, fluid communication is substantially shut off from the rebound portion 103 of the damper cylinder 102 into the valve body 204 (and hence through the bypass assembly 150 back to the compression portion 104 is closed) and its "dead-end" path is shown by arrow 219.

Preload adjuster 815 is formed in the valve body 204 for operation of the remotely controllable valve 200. When comparing FIG. 8 and FIG. 9 it is apparent that the preload adjuster 815 has been moved inward significantly in FIG. 9 to provide additional force onto piston 205 from coil spring 810.

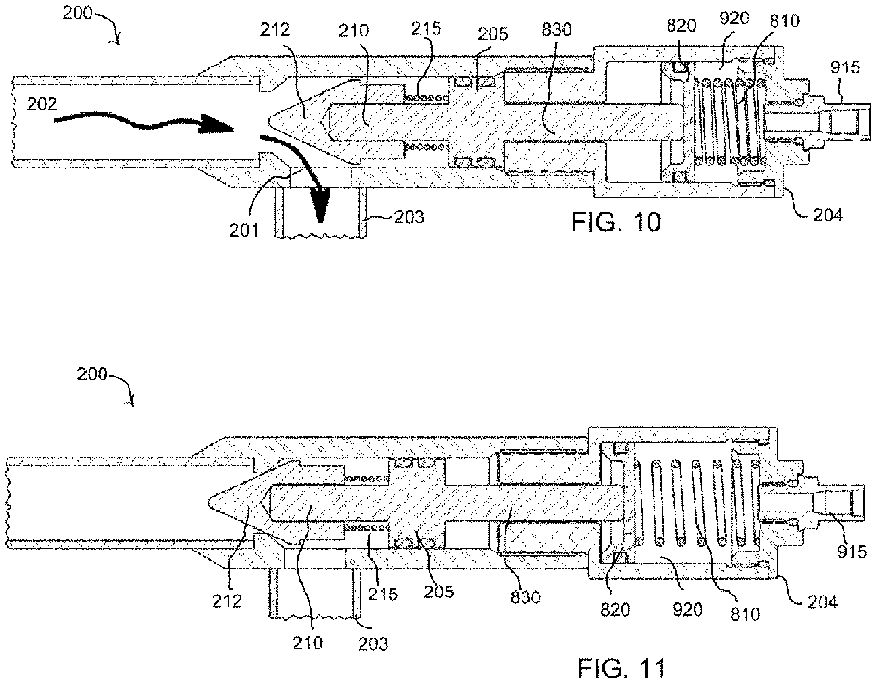

FIG. 10 is an enlarged section view showing a coil spring blow off system with a gas pressure supplement included in the remotely operable valve with of the bypass in the open position. For example, a gas such as nitrogen, air, or the like, can be added via inlet 915 into air chamber 920. The pressure of the gas can be adjusted remotely or at the unit to vary the force required to open the remotely controllable valve 200. By increasing or decreasing the gas pressure in air chamber 920 low speed compression and rebound can be adjusted. Again, the blow off valve also allows greater flow at high speed since the initial setting does not prevent full flow.

FIG. 11 is a section view showing the remotely controllable valve 200 of FIG. 10 in a closed position, (which it assumes during a rebound stroke of the damper unit 100). As shown, the cone-shaped member 212 is seated due to the force of the spring 215, coil spring 810, and air pressure in gas chamber 920, and absent an opposite force from fluid entering the remotely controllable valve 200 along path shown by arrows 156 from the bypass assembly 150. With the fluid path 201 closed, fluid communication is substantially shut off from the rebound portion 103 of the damper cylinder 102 into the valve body 204 (and hence through the bypass assembly 150 back to the compression portion 104 is closed) and its "dead-end" path is shown by arrow 219.

Gas inlet 915 is formed in the valve body 204 for operation of the remotely controllable valve 200. When comparing FIG. 10 and 11 it is apparent that the air pressure in gas chamber 920 has been increased which has moved coil spring piston 820 inward significantly in FIG. 11 to provide additional force onto coil spring piston 820.

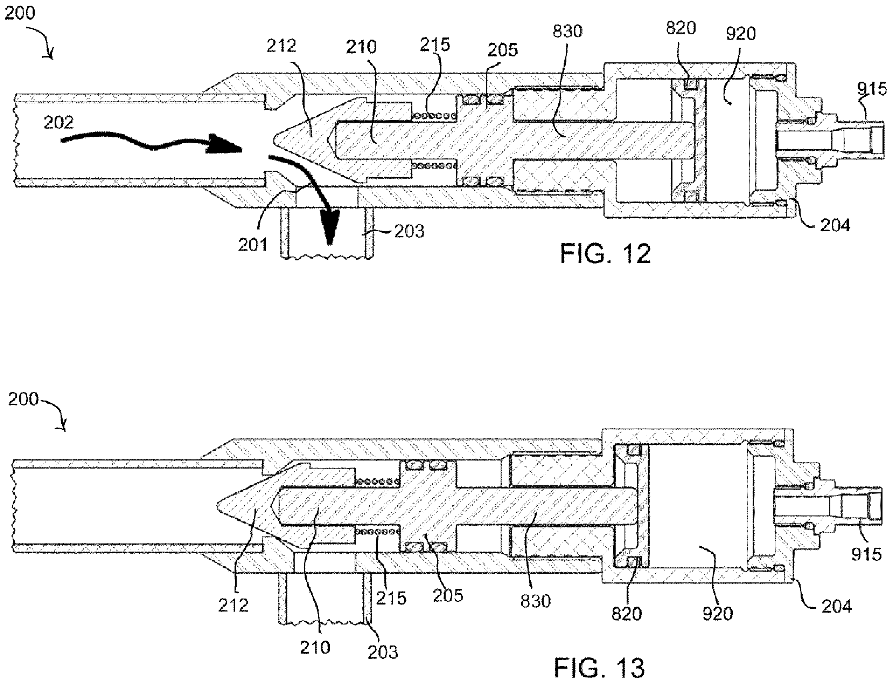

FIG. 12 is an enlarged section view showing an air spring blow off system included in the remotely operable valve with of the bypass in the open position. For example, a gas such as nitrogen, air, or the like, can be added via inlet 915 into air chamber 920. The pressure of the gas can be adjusted remotely or at the unit to vary the force required to open the remotely controllable valve 200. By increasing or decreasing the gas pressure in air chamber 920 low speed compression and rebound can be adjusted. Again, the blow off valve also allows greater flow at high speed since the initial setting does not prevent full flow.

FIG. 13 is a section view showing the remotely controllable valve 200 of FIG. 12 in a closed position (which it assumes during a rebound stroke of the damper unit 100). As shown, the cone-shaped member 212 is seated due to the force of the spring 215 and air pressure in gas chamber 920, and absent an opposite force from fluid entering the remotely controllable valve 200 along path shown by arrows 156 from the bypass assembly 150. With the fluid path 201 closed, fluid communication is substantially shut off from the rebound portion 103 of the damper cylinder 102 into the valve body 204 (and hence through the bypass assembly 150 back to the compression portion 104 is closed) and its "dead-end" path is shown by arrow 219.

As described above, gas inlet 915 is formed in the valve body 204 for operation of the remotely controllable valve 200. When comparing FIG. 12 and 13 it is apparent that the air pressure in gas chamber 920 has been increased to provide additional force onto coil spring piston 820.

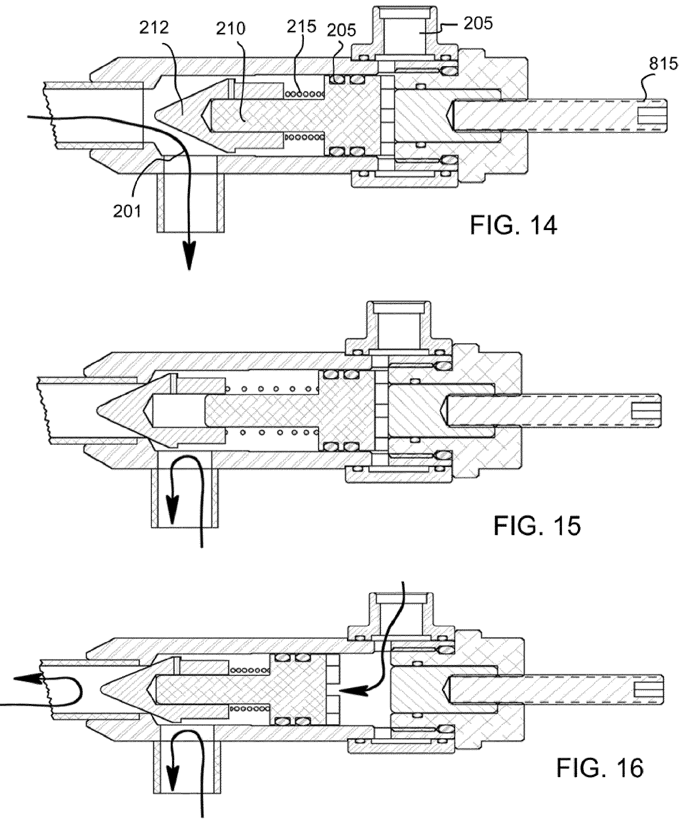

FIG. 14 is an enlarged section view showing the remotely operable valve of the bypass that includes a preload adjuster in the open position. FIG. 15 is a section view showing the valve of FIG. 14 in a closed position. FIG. 16 is a section view showing the valve of FIG. 14 in a locked-out position. In general, the operation of FIGS 14-16 is the same as that of FIGS 2-4. For example, Figure 14 shows remotely controllable valve 200 in the open position similar to Figure 2; Figure 15 shows remotely controllable valve 200 in the closed no rebound flow position similar to Figure 3; and Figure 16 shows remotely controllable valve 200 in the lockout energized position similar to Figure 4.

However, in addition to the actions described in FIGS 2-4, FIGS 14-16 utilize preload adjuster 815 to provide an additional layer of adjustment such that increased pressure adjustments made to preload adjuster 815 will result in higher bypass pressure required to open the remotely controllable valve 200 and correspondingly higher damping resistance in the bypass assembly 150 (more compression damping due to that bypass assembly 150).

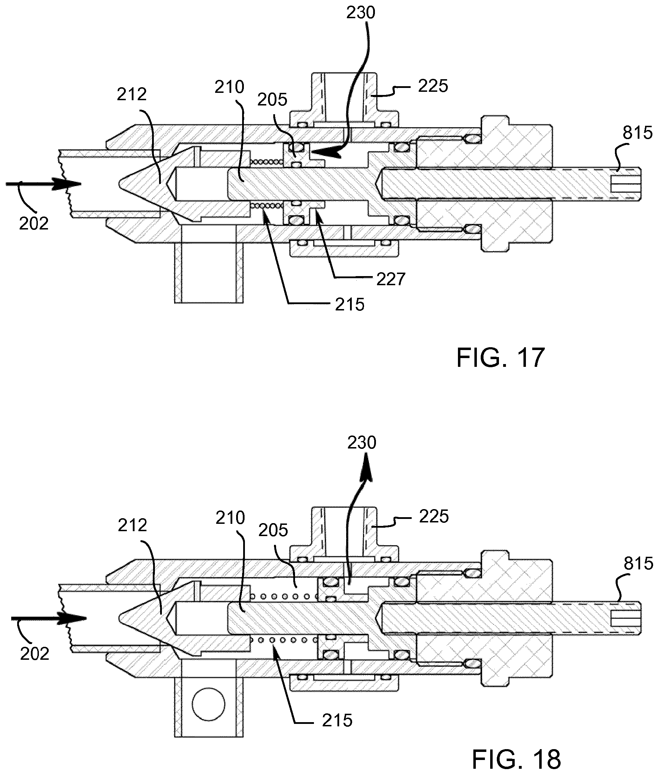

FIG. 17 is an enlarged section view showing the remotely operable valve of the bypass that includes a preload adjuster and hydraulic pressure being applied from to increase low speed damping. Similar to the discussion of Figure 4, in the embodiment shown, the control inlet 225 provides a fluid path 230 to a piston surface 227 formed on an end of the piston 205, opposite the cone-shaped member 212. Specifically, activating pressure is introduced via inlet 225 to move the piston 205 and with it, cone-shaped member 212 toward seat 217 putting the maximum spring load on spring 215. However, FIG. 17 also includes preload adjuster 815 which can also be used in conjunction with control inlet 225 such that less pressure is needed through inlet 225 to obtain the desired pre-load. In FIG. 17, the increase in the spring pre-load results in an increase in low-speed damping.

FIG. 18 is a section view showing the valve of FIG. 17 with the hydraulic pressure being removed to reduce low speed damping. That is, when the pressure is removed from inlet 225, the pre-load piston releases the spring 215 pre-load thereby reducing low-speed damping.

Thus, using one or a combination of the additional features including coil spring 810, preload adjuster 815, coil spring piston 820, and inlet 915, internal pressure sensitivity can be added to the position sensitivity of the bypass shock. The secondary spring constantly adjusts flow to the pressure created with each suspension event. In one embodiment, using the gas plus spring 810 version adds infinite adjustability of check valve crack pressure to aid with tuning. Moreover, the coil spring 810 can be adjusted similarly with spring rate and preload. It also adds reliability due to the simple mechanical nature. By providing the pressure sensitive characteristics, the remotely controllable valve 200 only allows the amount of flow thru the check valve that the suspension event demands. This simply and automatically keeps the vehicle more stable in the low shaft speed events such as braking turning and acceleration yet allows the suspension to soak up the big hits and allows free movement in the square edge hits which makes the ride more comfortable and controlled. Moreover, the added redundancy of the secondary system to the shock will increase reliability. In the event of a failure of the secondary system, by retaining the primary check valve, the vehicle can continue on with the same characteristics as the current system provide.

## Claims

1. A vehicle suspension damper (100) comprising:
a cylinder (102);
a damping fluid disposed within said cylinder;
a piston assembly disposed within said cylinder (102), said piston assembly comprising:
a piston (105) having a flow path (110, 112) formed through said piston;
a shim (115, 116) disposed to meter a flow of said damping fluid through said flow path; and
a first piston rod (107) coupled to said piston (105); and
a bypass assembly (150) providing a fluid pathway (156) between a first side of said piston and a second side of said piston, said bypass assembly comprising:
a remotely controllable valve (200) for permitting or preventing the flow of said damping fluid through said bypass assembly (150), said remotely controllable valve controlled based upon a variable parameter associated with a vehicle to which said vehicle suspension damper is coupled, said remotely controllable valve comprising:
a closing member comprising a moveable piston (205);
a seating member (212) selectively positionable with respect to the moveable piston (205); and
a biasing element (215) interposed between the moveable piston (205) and the seating member (212) to bias the seating member in a direction away from the moveable piston.
**characterised in that** said bypass assembly (150) comprises:
a coil spring preload blow off assembly, said coil spring preload blow off assembly comprising:
a coil spring piston (820) having a first side abut to a second piston rod (830) that is coupled to an opposite side of said moveable piston (205) from said second piston rod (830),
a coil spring (810) fixedly coupled between said coil spring piston (820) and a preload adjuster (815),
the preload adjuster (815) providing a variable level of compression to said coil spring (810) to vary a force required to open the remotely controllable valve (200).

2. The vehicle suspension damper of Claim 1 further comprising:
a reservoir (125) in fluid communication with said cylinder (102), said reservoir comprising:
a reservoir cylinder portion (128);
a rebound portion (103) in fluid communication with said cylinder (102); and
a floating piston (130) disposed within said reservoir cylinder portion (128).

3. The vehicle suspension damper of Claim 1 or 2, wherein said remotely controllable valve (200) is configured to selectively permit said flow of said damping fluid through said bypass assembly (150).

4. The vehicle suspension damper of Claim 1, 2 or 3, wherein said remotely controllable valve (200) is configured to selectively prevent said flow of said damping fluid through said bypass assembly (150).

5. The vehicle suspension damper of any preceding Claim, wherein said cylinder (102) further comprises:
an entry pathway (160), said entry pathway located in said cylinder (102) and fluidically coupling said bypass assembly (150) and said cylinder, said entry pathway disposed at a location in said cylinder (102) such that said damping fluid will not flow from said cylinder into said bypass assembly (150) after said piston (105) passes said entry pathway (160) during a compression stroke.

6. The vehicle suspension damper of any preceding Claim, wherein said remotely controllable valve (200) is coupled to a power steering system for a vehicle to which said vehicle suspension damper is coupled.

7. The vehicle suspension damper of any preceding Claim, wherein said remotely controllable valve (200) is coupled to a linear electric motor, said linear electric motor coupled to said vehicle to which said vehicle suspension damper is coupled.

8. A vehicle comprising a vehicle suspension damper (100) as claimed in any of claims 1 to 7.

9. An on/off road vehicle having four wheels, each wheel having a vehicle suspension damper as claimed in any of claims 1 to 7.

## Patentansprüche

1. Fahrzeugaufhängungsdämpfer (100), umfassend:
einen Zylinder (102);
ein Dämpfungsfluid, das in dem Zylinder angeordnet ist;
eine Kolbenanordnung, die in dem Zylinder (102) angeordnet ist, wobei die Kolbenanordnung umfasst:
einen Kolben (105), der einen Strömungsweg (110, 112) aufweist, der durch den Kolben hindurch ausgebildet ist;
eine Passscheibe (115, 116), die angeordnet ist, um das Strömen des Dämpfungsfluids durch den Strömungsweg zu dosieren; und
eine erste Kolbenstange (107), die mit dem Kolben (105) gekoppelt ist; und
eine Überströmungsleitungsanordnung (150), die einen Strömungsweg (156) zwischen einer ersten Seite des Kolbens und einer zweiten Seite des Kolbens bereitstellt, wobei die Überströmungsleitungsanordnung umfasst:
ein fernsteuerbares Ventil (200), um das Strömen des Dämpfungsfluids durch die Überströmungsleitungsanordnung (150) zu ermöglichen oder zu verhindern, wobei das fernsteuerbare Ventil anhand eines variablen Parameters gesteuert wird, die mit einem Fahrzeug assoziiert ist, mit dem der Fahrzeugaufhängungsdämpfer gekoppelt ist, wobei das fernsteuerbare Ventil aufweist:
ein Verschlusselement, aufweisend einen beweglichen Kolben (205);
ein Sitzelement (212), das in Bezug auf den beweglichen Kolben (205) selektiv positionierbar ist; und
ein Vorspannelement (215), das zwischen dem beweglichen Kolben (205) und dem Sitzelement (212) angeordnet ist, um das Sitzelement in einer Richtung von dem beweglichen Kolben (205) weg vorzuspannen;
**dadurch gekennzeichnet, dass** die Überströmungsleitungsanordnung (150) umfasst:
eine Anordnung zum Ablassen einer Spiralfedervorspannung, wobei die Anordnung zum Ablassen einer Spiralfedervorspannung umfasst:
einen Spiralfederkolben (820), der eine erste Seite aufweist, die an eine zweite Kolbenstange (830) anliegt, die mit einer der zweiten Kolbenstange (830) gegenüberliegenden Seite des beweglichen Kolbens (205) gekoppelt ist;
eine Spiralfeder (810), die zwischen dem Spiralfederkolben (820) und einem Vorspannungseinstellelement (815) fest gekoppelt ist;
wobei das Vorspannungseinstellelement (815) der Spiralfeder (810) ein variables Kompressionsniveau bereitstellt, um eine Kraft zu variieren, die erforderlich ist, um das fernsteuerbare Ventil (200) zu öffnen.

2. Fahrzeugaufhängungsdämpfer nach Anspruch 1, des Weiteren umfassend:
einen Speicher (125) in Fluidverbindung mit dem Zylinder (102), wobei der Speicher umfasst:
einen Speicherzylinderabschnitt (128);
einen Rückprallabschnitt (103) in Fluidverbindung mit dem Zylinder (102), und
einen schwimmenden Kolben (130), der innerhalb des Speicherzylinderabschnitts (128) angeordnet ist.

3. Fahrzeugaufhängungsdämpfer nach Anspruch 1 oder 2, wobei das fernsteuerbare Ventil (200) eingerichtet ist, selektiv das Strömen des Dämpfungsfluids durch die Überströmungsleitungsanordnung (150) zu ermöglichen.

4. Fahrzeugaufhängungsdämpfer nach Anspruch 1, 2 oder 3, wobei das fernsteuerbare Ventil (200) eingerichtet ist, selektiv das Strömen des Dämpfungsfluids durch die Überströmungsleitungsanordnung (150) zu verhindern.

5. Fahrzeugaufhängungsdämpfer nach einem der vorangegangen Ansprüche, wobei der Zylinder (102) des Weiteren umfasst:
einen Eingangsweg (160), wobei der Eingangsweg sich in dem Zylinder (102) befindet und die Überströmungsleitungsanordnung (150) und den Zylinder koppelt, wobei der Eingangsweg derart in dem Zylinder angeordnet ist, dass das Dämpfungsfluid nicht von dem Zylinder in die Überströmungsleitungsanordnung (150) fließt, nachdem sich der Kolben (105) während eines Verdichtungshubs an dem Eingangsweg (160) vorbeibewegt.

6. Fahrzeugaufhängungsdämpfer nach einem der vorangegangen Ansprüche, wobei das fernsteuerbare Ventil (200) gekoppelt ist mit einem Lenkhilfesystem für ein Fahrzeug, mit dem der Fahrzeugaufhängungsdämpfer gekoppelt ist.

7. Fahrzeugaufhängungsdämpfer nach einem der vorangegangen Ansprüche, wobei das fernsteuerbare Ventil (200) gekoppelt ist mit einem linearen Elektromotor, wobei der lineare Elektromotor gekoppelt ist mit dem ein Fahrzeug, mit dem der Fahrzeugaufhängungsdämpfer gekoppelt ist.

8. Fahrzeug, umfassend einen Fahrzeugaufhängungsdämpfer (100) nach einem der Ansprüche 1 bis 7.

9. Straßen- oder Geländefahrzeug, aufweisend vier Räder, wobei jedes Rad einen Fahrzeugaufhängungsdämpfer nach einem der Ansprüche 1 bis 7 aufweist.

## Revendications

1. Amortisseur de suspension de véhicule (100) comprenant :
un cylindre (102) ;
un fluide d'amortissement disposé au sein dudit cylindre ;
un ensemble piston disposé au sein dudit cylindre (102), ledit ensemble piston comprenant :
un piston (105) ayant un trajet d'écoulement (110, 112) formé à travers ledit piston ;
une cale (115, 116) disposée pour mesurer un écoulement dudit fluide d'amortissement à travers ledit trajet d'écoulement ; et
une première tige de piston (107) couplée audit piston (105) ; et
un ensemble de contournement (150) fournissant une voie fluidique (156) entre un premier côté dudit piston et un second côté dudit piston, ledit ensemble de contournement comprenant :
une soupape commandable à distance (200) pour permettre ou empêcher l'écoulement dudit fluide d'amortissement à travers ledit ensemble de contournement (150), ladite soupape commandable à distance étant commandée sur la base d'un paramètre variable associé à un véhicule auquel ledit amortisseur de suspension de véhicule est couplé, ladite soupape commandable à distance comprenant :
un organe de fermeture comprenant un piston mobile (205) ;
un organe de siège (212) pouvant être positionné sélectivement vis-à-vis du piston mobile (205) ; et
un élément de sollicitation (215) interposé entre le piston mobile (205) et l'organe de siège (212) pour solliciter l'organe de siège dans une direction en éloignement du piston mobile,
**caractérisé en ce que** ledit ensemble de contournement (150) comprend :
un ensemble de détente de précharge de ressort hélicoïdal, ledit ensemble de détente de précharge de ressort hélicoïdal comprenant :
un piston à ressort hélicoïdal (820) ayant un premier côté en butée sur une seconde tige de piston (830) qui est couplée à un côté opposé dudit piston mobile (205) par rapport à ladite seconde tige de piston (830),
un ressort hélicoïdal (810) couplé de manière fixe entre ledit piston à ressort hélicoïdal (820) et un dispositif de réglage de précharge (815),
le dispositif de réglage de précharge (815) fournissant un niveau variable de compression audit ressort hélicoïdal (810) pour faire varier une force requise pour ouvrir la soupape commandable à distance (200).

2. Amortisseur de suspension de véhicule selon la revendication 1, comprenant en outre :
un réservoir (125) en communication fluidique avec ledit cylindre (102), ledit réservoir comprenant :
une portion de cylindre de réservoir (128) ;
une portion de rebond (103) en communication fluidique avec ledit cylindre (102) ; et
un piston flottant (130) disposé au sein de ladite portion de cylindre de réservoir (128).

3. Amortisseur de suspension de véhicule selon la revendication 1 ou 2, dans lequel ladite soupape commandable à distance (200) est configurée pour permettre sélectivement ledit écoulement dudit fluide d'amortissement à travers ledit ensemble de contournement (150).

4. Amortisseur de suspension de véhicule selon la revendication 1, 2 ou 3, dans lequel ladite soupape commandable à distance (200) est configurée pour empêcher sélectivement ledit écoulement dudit fluide d'amortissement à travers ledit ensemble de contournement (150).

5. Amortisseur de suspension de véhicule selon l'une quelconque des revendications précédentes, dans lequel ledit cylindre (102) comprend en outre :
une voie d'entrée (160), ladite voie d'entrée étant située dans ledit cylindre (102) et couplant fluidiquement ledit ensemble de contournement (150) et ledit cylindre, ladite voie d'entrée étant disposée à un emplacement dans ledit cylindre (102) de sorte que ledit fluide d'amortissement ne s'écoule pas depuis ledit cylindre jusque dans ledit ensemble de contournement (150) après le passage par ledit piston (105) de ladite voie d'entrée (160) pendant une course de compression.

6. Amortisseur de suspension de véhicule selon l'une quelconque des revendications précédentes, dans lequel ladite soupape commandable à distance (200) est couplée à un système de direction assistée pour un véhicule auquel ledit amortisseur de suspension de véhicule est couplé.

7. Amortisseur de suspension de véhicule selon l'une quelconque des revendications précédentes, dans lequel ladite soupape commandable à distance (200) est couplée à un moteur électrique linéaire, ledit moteur électrique linéaire étant couplé audit véhicule auquel ledit amortisseur de suspension de véhicule est couplé.

8. Véhicule comprenant un amortisseur de suspension de véhicule (100) tel que revendiqué dans l'une quelconque des revendications 1 à 7.

9. Véhicule routier/hors-route ayant quatre roues, chaque roue ayant un amortisseur de suspension de véhicule tel que revendiqué dans l'une quelconque des revendications 1 à 7.
